(19) Europäisches Patentamt / European Patent Office / Office européen des brevets

(11) **EP 2 149 978 B1**

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(51) Int Cl.:
*H02P 7/29* *(2006.01)*  *G01P 3/489* *(2006.01)*
*G05B 19/19* *(2006.01)*  *H02M 3/335* *(2006.01)*
*H03M 1/08* *(2006.01)*  *H02P 29/00* *(2006.01)*

(21) Anmeldenummer: **09166499.5**

(22) Anmeldetag: **27.07.2009**

(54) **Verfahren zur Messwertermittlung in einem getaktet angesteuerten System**

Method for determining measurement values in a synchronised controlled system

Procédé de détermination de la valeur de mesure dans un système commandé de manière cadencée

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.08.2008 DE 102008040925**

(43) Veröffentlichungstag der Anmeldung:
**03.02.2010 Patentblatt 2010/05**

(73) Patentinhaber: **Robert Bosch GmbH**
**70442 Stuttgart (DE)**

(72) Erfinder:
• **Emde, Christoph**
**74211 Leingarten (DE)**
• **Schmidtlein, Andreas**
**71732 Tamm (DE)**
• **Baumgaertner, Rainer**
**74397 Pfaffenhofen (DE)**

(56) Entgegenhaltungen:
**DE-A1- 10 359 224    DE-A1-102005 013 143**
**JP-A- 54 104 766    US-A1- 2005 231 253**
**US-A1- 2007 109 821**

EP 2 149 978 B1

**Beschreibung**

Die Erfindung beschreibt ein Verfahren zur Messwertermittlung in einem getaktet angesteuerten System. Insbesondere bezieht sich die vorliegende Erfindung auf ein Verfahren zur Messwertermittlung in einem getaktet angesteuerten System zur Ermittlung der Versorgungsspannung.

Stand der Technik

In getakteten Systemen besteht oft die Notwendigkeit, parallel - also mehr oder weniger gleichzeitig - zur Ansteuerung Messwerte aufzunehmen. Von der Ansteuerung abhängige Messwerte stellen dabei erhöhte Anforderungen an die Messwertaufbereitung. Gebräuchliche Verfahren, die z.B. mit analogen Filtern arbeiten, sind schwer zu realisieren. Ihre entsprechende Auslegung ist statisch und kann im Betrieb nicht angepasst werden. Zwar kann durch Verwendung von Sample- and Hold-Gliedern diese Situation verbessert werden, jedoch stößt in Systemen, in denen sich die Ansteuerung fortlaufend ändert und/oder in denen ein zusätzliches, evtl. sogar variierendes Störsignal dem Messsignal überlagert ist, auch die Auslegung der Messumgebung mit Hilfe von Sample- and Hold-Gliedern an ihre Grenzen.

Die Offenlegungsschrift DE 103 59 224 A1 beschreibt eine Vorrichtung und ein Verfahren zur Erfassung der Nachlaufspannung eines Gleichstrommotors, wobei der Gleichstrommotor durch eine getaktete Ansteuerung betrieben wird. Dabei weist die getaktete Ansteuerung wenigstens während des Einschaltvorgangs des Motors ein vorgebbares Puls/Pulspausenverhältnis auf. Weiterhin ist wenigstens ein Auswertemittel vorgesehen, welches die Nachlaufspannung aus einer die Nachlaufspannuntt des Gleichstrommotors repräsentierenden Nachlaufspannungsgröße erfasst.

Vorteile der Erfindung

Die vorliegende Erfindung überwindet die oben beschriebene Problematik durch Bereitstellung eines Verfahrens zur Messwertermittlung in einem getaktet angesteuerten System nach Anspruch 1.

Das erfindungsgemäße Verfahren hat den Vorteil, dass es während des Betriebs des getaktet angesteuerten Systems anpassbar ist. Zusätzlich erlaubt dieses Verfahren eine Messwerterfassung über mehrere Ansteuerungszeiträume. Dadurch sind präzise Messwertaufnahmen nicht nur in Nichtansteuerungszeiträumen, sondern auch in Ansteuerungszeiträumen möglich, in welchen die Anwendung konventioneller Verfahren z. B. wegen notwendiger Einschwingzeiten und physikalischer Begrenzungen aussichtslos ist.

Vorzugsweise erfolgt das Bestimmen der ersten und/oder zweiten Integrationszeiträume außerdem in Abhängigkeit von wenigstens einem individuellen Parameter des Systems. Dieser individuelle Parameter kann dabei ein systemimmanenter Parameter sein, also ein Parameter, der durch die hardware- und/oder softwaremäßige Konfiguration des Systems selbst gegeben ist, oder aber auch ein vom System ausgegebener Messwert. Dadurch kann eine Rückkopplungsmöglichkeit vom System zurück zur Messumgebung geschaffen werden, wodurch ein Regelkreislauf zwischen System und Messumgebung realisierbar ist.

Vorzugsweise wird bei den individuellen Parametern die Trägheit des Systems und/oder seiner Messumgebung berücksichtigt. Dadurch können physikalische Realitäten, wie z. B. endliche Flankensteilheiten bei Mess- und/oder Ansteuerungssignalen sowie Schaltverzögerungen durch Induktivitäten und Kapazitäten bei den Ansteuer- und/oder Messvorgängen einkalkuliert werden. Dabei ist es insbesondere vorteilhaft, bei den individuellen Parametern die Zeitverzögerung zu berücksichtigen, mit der das System auf die Ansteuerungen reagiert. So können z. B. durch Verzögerung des Integrationszeitraums die Verzögerungen des Schaltersignals sowie die Verzögerungen bei den Durchschaltvorgängen an einer Funktionseinheit des Systems ausgeglichen werden.

Ferner ist es vorteilhaft, bei den individuellen Parametern die Zeitverzögerung bei der Durchführung von einem oder mehreren der Schritte des erfindungsgemäßen Verfahrens zu berücksichtigen, insbesondere beim Erfassen der von der Ansteuerung abhängigen Messgröße des Systems, beim Ermitteln von Summations- und/oder Integrationswerten durch Summation und/oder Integration der Messgröße während der ersten und/oder zweiten Integrationszeiträume, und beim Ermitteln des Messwertes für wenigstens einen der Ansteuerungszeiträume und/oder Nichtansteuerungszeiträume auf Grundlage von Zeitdaten der ersten und/oder zweiten Integrationszeiträume und von den ermittelten Summations- und/oder Integrationswerten.

Gemäß einer vorteilhaften Ausführungsform der Erfindung umfasst der Schritt des Ermittelns von Summations- und/oder Integrationswerten durch Summation und/oder Integration der Messgröße während der ersten und/oder zweiten Integrationszeiträume die Verwendung von digitaler Summation und/oder analoger Integration. Durch eine solche Mischrealisierung können die Stärken beider Varianten jeweils optimal genutzt werden.

Dabei ist die Mischung mindestens eines analogen Integrationsschrittes mittels eines Spannungs-/Frequenzwandlers und mindestens einer digitalen Summation mittels einer Hardwarelogik aus Zählern besonders vorteilhaft. Auch die Mischung mindestens eines analogen Integrationsschrittes mittels Delta/Sigma-Modulatoren und mindestens einer digitalen Summation mittels einer Hardwarelogik aus Zählern ist denkbar.

Erfindungsgemäß umfasst die Messwertermittlung die Ermittlung wenigstens eines mittleren Spannungswertes der am System anliegenden Spannung. Dabei umfasst das Verfahren vorzugsweise folgende näher spezifizierte Schritte: Bestimmen sowohl von ersten Integrationszeiträumen in Abhängigkeit von der Taktung, wobei die ersten Integrationszeiträume innerhalb wenigstens eines der Ansteuerungszeiträume liegen, als auch Bestimmen von zweiten Integrationszeiträumen in Abhängigkeit von der Taktung, wobei die zweiten Integrationszeiträume innerhalb wenigstens eines der Nichtansteuerungszeiträume liegen, Erfassen der am System anliegenden Spannung, Ermitteln von Summations- und/oder Integrationswerten durch Summation und/oder Integration der Spannung während der ersten und zweiten Integrationszeiträume, Ermitteln des wenigstens einen mittleren Spannungswertes für wenigstens einen der Ansteuerungszeiträume und/oder Nichtansteuerungszeiträume auf Grundlage von Zeitdaten der ersten und/oder zweiten Integrationszeiträume und von den ermittelten Summations- und/oder Integrationswerten.

Vorzugsweise umfasst dabei der Schritt des Ermittelns von Summations- und/oder Integrationswerten folgende Unterschritte: Ermitteln eines ersten Integrationswertes durch Integration der Spannung während wenigstens einem der ersten Integrationszeiträume, und Ermitteln eines zweiten Integrationswertes durch Integration der Spannung während wenigstens einem der zweiten Integrationszeiträume. Von Vorteil ist es in diesem Zusammenhang auch, wenn der Schritt des Ermittelns des wenigstens einen mittleren Spannungswertes folgende Unterschritte umfasst: Ermitteln eines ersten mittleren Spannungswertes, der die mittlere Spannung innerhalb der Ansteuerungszeiträume repräsentiert, durch Division des ersten Integrationswertes durch die Dauer seines zugehörigen ersten Integrationszeitraums, und Ermitteln eines zweiten mittleren Spannungswertes, der die mittlere Spannung innerhalb der Nichtansteuerungszeiträume repräsentiert, durch Division des zweiten Integrationswertes durch die Dauer seines zugehörigen zweiten Integrationszeitraums.

Ferner kann dieses Verfahren die Ermittlung des Stromwertes umfassen, der den durch die Ansteuerung verursachten Stromzuwachs repräsentiert. Hierfür bietet sich insbesondere die Strommessung im Verbraucherpfad an. Dabei ist es vorteilhaft, auch hier die integrative Messmethode zu verwenden, wie sie weiter oben schon eingehend im Zusammenhang mit der integrativen Messung von Spannungen beschrieben worden ist.

Schließlich kann auf Grundlage des ersten und zweiten mittleren Spannungswertes, insbesondere durch Differenzbildung und anschließende Division durch den ermittelten Stromwert, der Innenwiderstand der Spannungsquelle ermittelt werden, welche das System mit Strom versorgt.

Das erfindungsgemäße Verfahren nach der besonders bevorzugen Ausführungsform hat den Vorteil der besonders hohen Messgenauigkeit bei der Ermittlung der Versorgungsspannung des Systems. Durch die Auftrennung der Messung in Messblöcke innerhalb und außerhalb der Ansteuerungszeiträume sind zudem erweiterte Analysefunktionen realisierbar, beispielsweise im Bordnetzsystem eines Kraftfahrzeugs. So bietet das erfindungsgemäße Verfahren in Kombination mit der getakteten Ansteuerung des Systems die Möglichkeit, verschiedene Bordnetz-Parameter zu ermitteln, insbesondere die Bordnetzspannung und den Bordnetz-Innenwiderstand. Die während der Ansteuerungszeiträume ermittelten Messwerte sind den durch herkömmliche Verfahren gewonnenen Messwerten überlegen, da durch Messung während der Ansteuerungszeiträume die effektive Lastsituation erfasst wird. Dabei sind die Messvorgänge während des Betriebs des Systems konfigurierbar, was eine wesentlich höhere Flexibilität bietet als bei bekannten Messverfahren. Durch Synchronisierung der Strommessung und der Bordnetzspannungsmessung mit der Ansteuerung können außerdem die störenden Spannungsschwankungen, welche durch andere Verbraucher im Bordnetz verursacht werden, weitgehend ausgefiltert werden. Die im Rahmen des oben beschriebenen Verfahrens ermittelten Informationen über den aktuellen Zustand des Bordnetzes können zur Verbesserung bzw. Optimierung oder Anpassung des Systemverhaltens genutzt werden, z. B. um eine maximale Performance und/oder eine vollständige Ausnutzung der vorhandenen Systemressourcen zu erreichen.

Weitere Merkmale und Vorteile von Ausführungsformen der Erfindung ergeben sich aus der nachfolgenden Beschreibung mit Bezug auf die beigefügten Figuren.

Kurzbeschreibung der Figuren

Es zeigen:

Fig. 1     einen möglichen Ablauf des erfindungsgemäßen Verfahrens,

Fig. 2     eine erläuternde Darstellung eines vorteilhaften Zusammenwirkens der Schritte des erfindungsgemäßen Verfahrens,

Fig. 3     den zeitlichen Verlauf verschiedener Signale im Rahmen der Durchführung des erfindungsgemäßen Verfahrens,

Fig. 4    eine erläuternde Darstellung eines vorteilhaften Zusammenwirkens der Schritte des erfindungsgemäßen Verfahrens gemäß einer ersten Ausführungsform,

Fig. 5    eine erläuternde Darstellung eines vorteilhaften Zusammenwirkens der Schritte des erfindungsgemäßen Verfahrens gemäß einer zweiten Ausführungsform,

Fig. 6    den zeitlichen Verlauf von Strom und Spannung in einem getaktet angesteuerten System im Rahmen der Durchführung des erfindungsgemäßen Verfahrens gemäß einer besonders bevorzugten Ausführungsform, und

Fig. 7    eine erläuternde Darstellung eines vorteilhaften Zusammenwirkens der Schritte des erfindungsgemäßen Verfahrens gemäß der besonders bevorzugten Ausführungsform.

Beschreibung der Ausführungsbeispiele

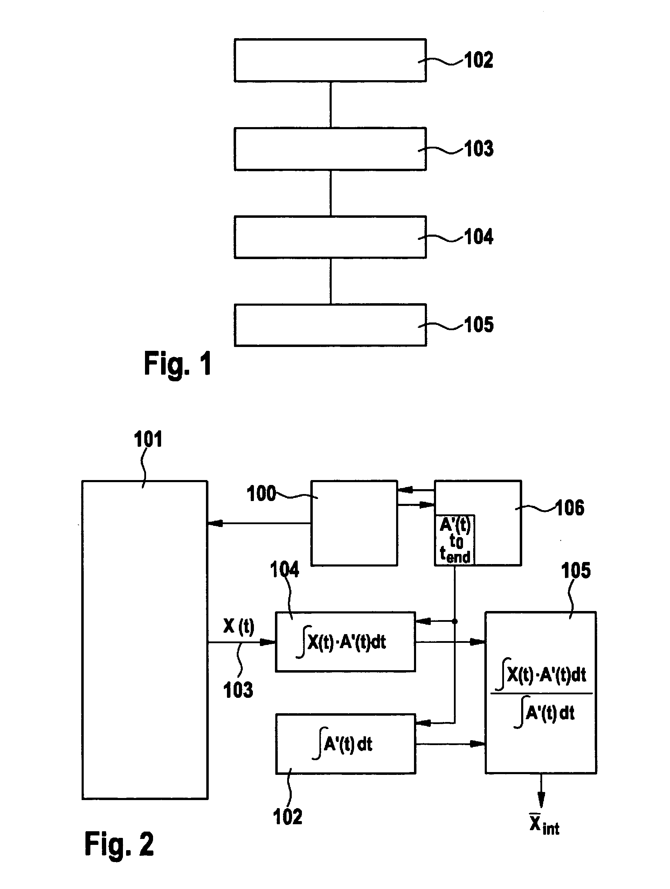

Zunächst werden anhand der Fig. 1 die verschiedenen Möglichkeiten erläutert, wie das erfindungsgemäße Verfahren ablaufen kann. Dieses Verfahren wird eingesetzt zur Messwertermittlung in einem getaktet angesteuerten System 101, wobei die Taktung Ansteuerungszeiträume aufweist, in denen das System 101 angesteuert wird, und Nichtansteuerungszeiträume aufweist, in denen das System 101 nicht angesteuert wird.

Gemäß einem bevorzugten Verfahrensablauf werden zunächst erste Integrationszeiträume in Abhängigkeit von der Taktung bestimmt, wobei die ersten Integrationszeiträume innerhalb wenigstens eines der Ansteuerungszeiträume liegen (Schritt 102.1). Zusätzlich oder alternativ dazu werden zweite Integrationszeiträume in Abhängigkeit von der Taktung bestimmt, wobei die zweiten Integrationszeiträume innerhalb wenigstens eines der Nichtansteuerungszeiträume liegen (Schritt 102.2). Durch dieses Vorgehen wird also eine Separierung von Integrationsvorgängen erreicht, und zwar einerseits in Integrationsvorgänge während Ansteuerphasen und andererseits in Integrationsvorgänge während Nichtansteuerphasen. Die Integrationsvorgänge können sich dabei über mehrere voneinander getrennte Ansteuerphasen bzw. Nichtansteuerphasen erstrecken, sie können aber auch genauso gut nur über einen Teil einer einzigen Ansteuerphase bzw. Nichtansteuerphase laufen.

Dann wird eine von der Ansteuerung abhängige Messgröße des Systems 101 erfasst (Schritt 103). Dies kann z.B. die Spannung sein, die über einer bestimmten Komponente des Systems 101 abfällt. Es ist aber auch jede andere Messgröße denkbar.

Nun werden durch Summation und/oder Integration der Messgröße während der ersten und/oder zweiten Integrationszeiträume Summations- und/oder Integrationswerte ermittelt (Schritt 104). Dabei kann die Durchführung des Schrittes 104 die Verwendung von digitaler Summation und/oder analoger Integration umfassen, also wahlweise nur auf Grundlage digitaler Summation oder analoger Integration, oder auf Grundlage einer Mischung aus den beiden Varianten. Generell gilt für die gesamte Darstellung der vorliegenden Erfindung, dass nicht notwendigerweise integriert werden muss, sondern in der tatsächlichen Realisierung aller Verfahrensschritte jegliche Näherungsverfahren eingesetzt werden können, wie z. B. diskrete digitale bzw. analoge Summation. Die grundlegenden Charakteristika des erfindungsgemäßen Verfahrens sind von der Wahl des verwendeten Integrationsverfahrens unabhängig.

Anschließend wird auf Grundlage von Zeitdaten der ersten und/oder zweiten Integrationszeiträume und auf Grundlage von den ermittelten Summations- und/oder Integrationswerten der Messwert für wenigstens einen der Ansteuerungszeiträume und/oder Nichtansteuerungszeiträume ermittelt (Schritt 105). Als die Zeitdaten der ersten und/oder zweiten Integrationszeiträume kommen in erster Linie der jeweilige zeitliche Anfang und das jeweilige zeitliche Ende des Integrationszeitraums in Frage. Aus diesen Daten kann letztlich auch die Dauer des jeweiligen Integrationszeitraums ermittelt werden, der wie oben bereits erläutert nicht an einem einzigen Stück vorliegen muss.

Es wird betont, dass der in Fig. 1 dargestellte Ablauf der Verfahrensschritte rein exemplarisch ist. Es ist auch eine andere Abfolge der Schritte denkbar. So kann z. B. das Bestimmen der ersten und/oder zweiten Integrationszeiträume zu jedem beliebigen Zeitpunkt des Verfahrens erfolgen. Auch das Erfassen der von der Ansteuerung abhängigen Messgröße des Systems muss nicht notwendigerweise nach dem Bestimmen der ersten und/oder zweiten Integrationszeiträume erfolgen, sondern die Messgröße kann auch vorher, quasi auf Vorrat, erfasst und evtl. aufgezeichnet werden.

Im Folgenden wird unter Bezugnahme auf die Fign. 1, 2 und 3 anhand des zeitlichen Verlaufs verschiedener Signale im Rahmen der Durchführung des erfindungsgemäßen Verfahrens ein vorteilhaftes Zusammenwirken der Schritte des erfindungsgemäßen Verfahrens dargestellt.

Das zu messende Signal X(t) 202, also die von der Ansteuerung abhängige Messgröße des Systems 101, wird im Schritt 103 erfasst und an den Eingang einer Auswertelogik geführt. Die Auswertelogik berechnet, beispielsweise durch Integration, das Integral $X_{int}$ während der Ansteuerungszeiträume des Schalters, also in denjenigen Zeiträumen, in denen die Schalterfunktion A(t) den Wert 1 annimmt. Da reale Systeme nur endliche Flankensteilheiten aufweisen, reagiert sowohl das System 101 sowie dessen Messumgebung lediglich zeitverzögert. Deshalb beschreibt die für die Erfassung der Messgröße relevante Schalterfunktion A'(t) 201 die Ansteuerung 100 unter Berücksichtigung der individuellen physikalischen Gegebenheiten, wie Schaltverzögerungen, Induktivitäten und Kapazitäten. Im Gegensatz zur eigentlichen Schalteransteuerung A(t) (nicht dargestellt) sind bei der relevanten Schalterfunktion A'(t) nur die für die Messung relevanten Zeitpunkte durch einen Funktionswert gleich 1 gekennzeichnet. A'(t) kann aus A(t) beispielsweise durch eine zeitliche Verschiebung hervorgehen, z. B. durch Verschiebung um wenige Mikrosekunden, um die Durchschaltvorgänge am Motorschalter des Systems 101 zu berücksichtigen. Eine weitere Möglichkeit ist die völlig freie Definierung der Schalterfunktion A'(t), z. B. dass die positive, also ansteigende Flanke von A'(t) einige x Mikrosekunden auf die positive Flanke von A(t) folgt, und ebenso frei definierbar die fallende Flanke von A'(t) einige y Mikrosekunden auf die fallende Flanke von A(t) folgt. Damit können z. B. induktiv verursachte Ansteuerbereiche von der Messung ausgeschlossen werden.

Für das Integral $X_{int}$ über die Messgröße X(t) während der Ansteuerungszeiträume gilt dann folgendes:

$$X_{int} = \int X(t) \cdot A'(t)\, dt \qquad \text{(Schritt 104)}$$

Zusätzlich umfasst die Auswertelogik eine Funktionalität zum Ermitteln der Gesamtansteuerungszeitdauer des Motorschalters während der Messdauer:

$$D_{int} = \int A'(t)\, dt \qquad \text{(Graph 203, Schritt 102)}$$

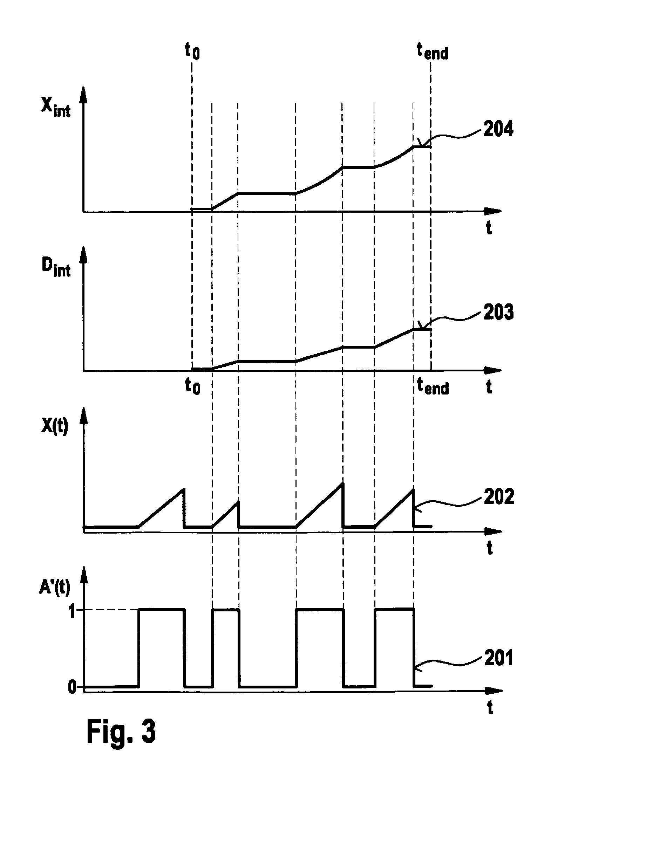

Vorzugsweise werden $X_{int}$ und $D_{int}$ synchron ermittelt. Damit ist die Messung über einen vorbestimmten Zeitraum möglich. Die Integrationsgrenzen sind in Fig. 3 mit $t_0$ und $t_{end}$ bezeichnet. Eine entsprechende Ablaufsteuerung 106 generiert A'(t) und $t_0$ und $t_{end}$ abhängig von der gewählten Realisierung.

Die Auswertungs-Software ist dann in der Lage, z. B. den mittleren Spannungsabfall $\overline{X}_{int}$ im Messzeitraum auf Grundlage folgender Beziehung zu ermitteln:

$$\overline{X}_{int} = \frac{\int\limits_{t_0}^{t_{end}} X(t) \cdot A'(t)\, dt}{\int\limits_{t_0}^{t_{end}} A'(t)\, dt} \qquad \text{(Graph 204, Schritt 105)}$$

$\overline{X}_{int}$ stellt dann den im Schritt 105 ermittelten Messwert dar.

Das beschriebene Verfahren kann sowohl durch teilweise analoge Integration als auch durch digitale Summation realisiert werden. Eine Mischung von analoger Integration und digitaler Summation ist ebenfalls möglich.

Als konkrete Realisierungsmöglichkeiten kommen beispielsweise in Betracht:

- analoge Integration in HW Beschaltung;
- Überabtastung mit extrem schnellen und hochauflösenden Analog-/Digitalwandlern und anschließender Auswertung in Software. Der Integrationscharakter ist dann besonders gut erfüllt, wenn die Abtastfrequenz sehr hoch ist;
- Realisierung in Hardware unter Benutzung von schnellen Delta-/Sigma-Modulatoren mit anschließender Summierung über Hardware-Zähler;
- Verwendung von sehr schnellen Spannungs-/Frequenzwandlern mit nachgeschalteter Hardwarelogik aus Zählern.

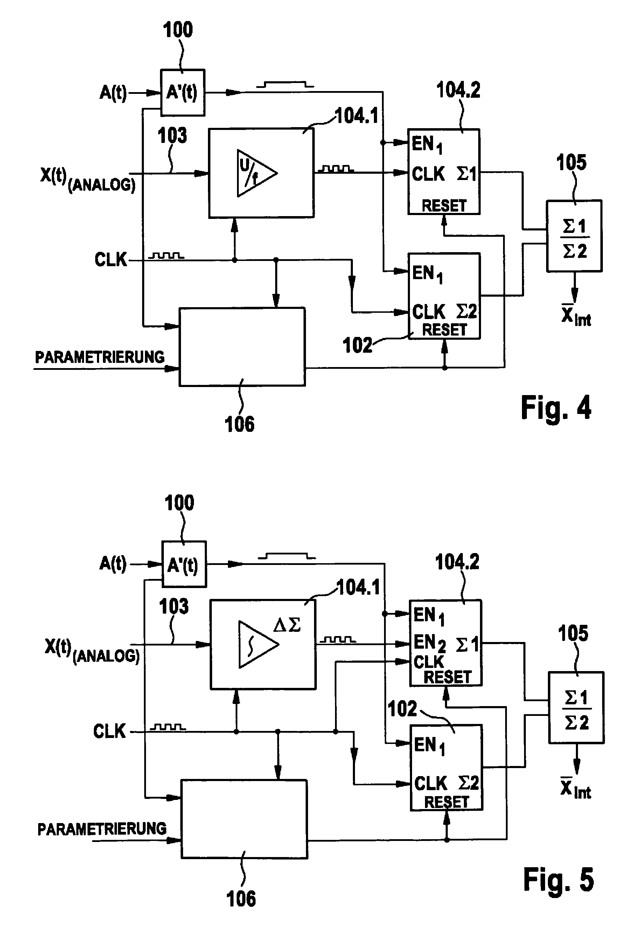

Fig. 4 zeigt eine erläuternde Darstellung eines vorteilhaften Zusammenwirkens der Schritte des erfindungsgemäßen Verfahrens gemäß einer ersten Ausführungsform. Das Verfahren wird hier mittels eines Spannungs-/Frequenzwandlers realisiert. In dieser ersten Ausführungsform ist die Integration (Schritt 104) als Mischrealisierung ausgeführt. Während Bezugsziffer 104.1 den analogen Integrationsschritt mittels Spannungs-/Frequenzwandler bezeichnet, steht Bezugsziffer 104.2 für die digitale Summation, z. B. mittels Zählern.

Fig. 5 zeigt eine erläuternde Darstellung eines vorteilhaften Zusammenwirkens der Schritte des erfindungsgemäßen Verfahrens gemäß einer zweiten Ausführungsform. Das Verfahren wird hier mittels Delta-/Sigma-Modulatoren realisiert. Während Bezugsziffer 104.1 den analogen Integrationsschritt mittels Delta-/Sigma-Modulatoren bezeichnet, steht Bezugsziffer 104.2 für die digitale Summation, z. B. mittels Zählern.

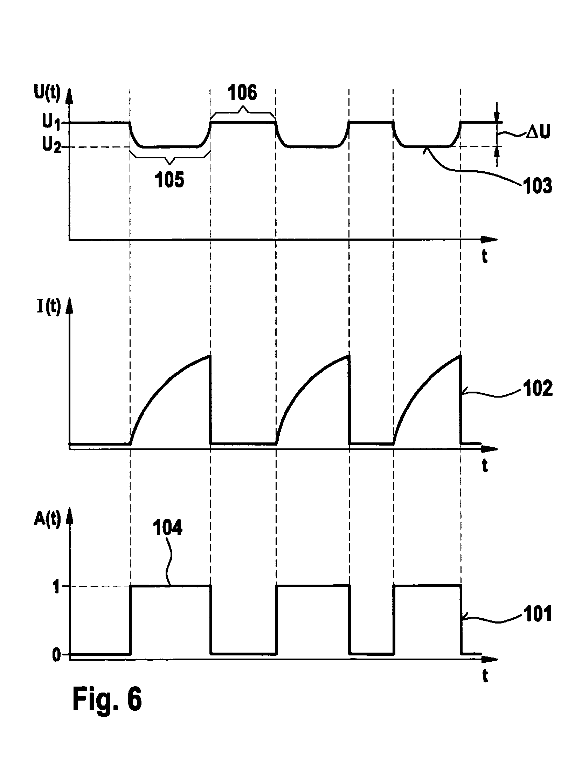

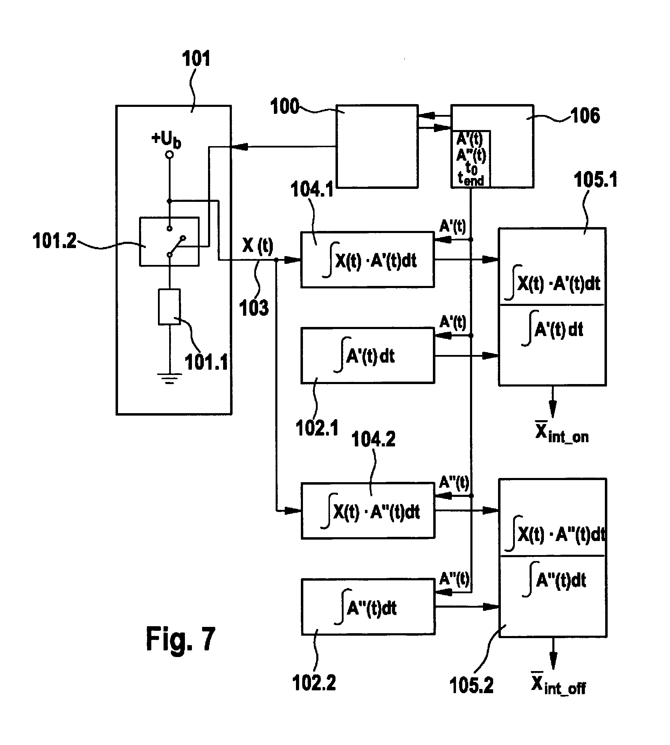

Anhand der Fign. 6 und 7 wird im Folgenden die Einbettung des erfindungsgemäßen Verfahrens in eine integrative Messmethode in getakteten Systemen zur Ermittlung der Versorgungsspannung und/oder des Innenwiderstandes eines Systems beschrieben. Die Fign. 6 und 7 beziehen sich außerdem auf die Darstellung der besonders bevorzugten Ausführungsform der Erfindung, wie sie am Ende des einleitenden Teils der Beschreibung geschildert ist.

Fig. 6 zeigt den zeitlichen Verlauf von Strom I(t) und Spannung U(t) in einem getaktet angesteuerten System. Dabei ist mit Bezugsziffer 101 das Ansteuersignal A(t) am Halbleiterschalter 101.2 (siehe Fig. 7) bezeichnet. Mit 102 ist der Verlauf des Stromwertes I(t) im Leistungspfad bezeichnet. Die 103 steht für den Verlauf der Versorgungsspannung U(t) im Leistungspfad. Wie durch die Bezugsziffer 105 in Fig. 6 hervorgehoben, bricht die Versorgungsspannung U(t) bei Stromanstieg im Verbraucher vom Wert $U_1$ auf $U_2$ ein. Korrespondierend dazu steigt die Versorgungsspannung U(t) beim Abschalten der Last von $U_2$ auf $U_1$ an (siehe Bezugsziffer 106 in Fig. 6). $\Delta U$ bezeichnet die aus den Spannungswerten $U_1$ und $U_2$ ermittelte durchschnittliche Spannungsdifferenz.

Die Spannungsmessung wird mit der integrativen Messmethode durchgeführt (siehe Fig. 7). Die Messung erfolgt mittels zweier getrennter Integrationskanäle, die an die gleiche Eingangsschaltung angeschlossen sind. Die Synchronisierung der Messkanäle wird so durchgeführt, dass bei angesteuertem Schalter der eine Kanal freigeschaltet wird, und bei nicht-angesteuertem, ausgeschaltetem Schalter der andere Kanal freigeschaltet wird. Beide Kanäle haben unabhängige Zeitintegratoren, welche die für die Normierung benötigten Zeiten liefern. Nach Normierung ergeben sich zwei unterschiedliche Werte der gemessenen Versorgungsspannung. Zum einen die durchschnittliche Versorgungsspannung $U_2$ während eines Ansteuerungszeitraums, zum anderen die durchschnittliche Versorgungsspannung $U_1$ in einem ansteuerungsfreien Zeitraum. Der durch den geschalteten Strom verursachte Spannungseinbruch kann durch Differenzbildung $U_1 - U_2$ ermittelt werden. In Kombination mit der Strommessung im Verbrauchspfad, vorzugsweise unter Verwendung der integrativen Messmethode, welche synchron zur Spannungsmessung erfolgen kann, lässt sich der effektive Innenwiderstand der Stromversorgung berechnen.

Fig. 7 zeigt eine erläuternde Darstellung eines vorteilhaften Zusammenwirkens der Schritte des erfindungsgemäßen Verfahrens gemäß der besonders bevorzugten Ausführungsform zur Ermittlung der Versorgungsspannung. Die Fig. 7 stimmt in ihrem rechten oberen Teil mit der Fig. 2 überein, weshalb zur Vermeidung von Wiederholungen bezüglich der gleichen Figurenbestandteile auf die entsprechenden Ausführungen weiter oben zu Fig. 2 verwiesen wird. Im linken Teil der Fig. 7 zeigt der Block "angesteuertes System" 101 den schematischen Lastpfad. Der Lastschalter 101.2, welcher vorzugsweise als Halbleiterschalter ausgeführt ist, wird angesteuert von der Lastansteuerung 100. Die Last 101.1 wird über den Lastschalter 101.2 mit der Spannungsversorgung $U_b$ verbunden. Die Ablaufsteuerung 106 generiert A'(t), A''(t), $t_0$ und $t_{end}$. A'(t) nimmt während der Ansteuerungsphase den Wert 1 an. A''(t) nimmt während der Nichtansteuerungsphase den Wert 1 an.

Im Unterschied zum Wirkmechanismus der Fig. 2 existiert in Fig. 7 der Integrationsteil 102, 104, 105 in doppelter Ausführung. Die Bestandteile 104.1, 102.1, 105.1 dienen zur Ermittlung der Versorgungsspannung während der Ansteuerung. Die Bestandteile 104.2, 102.2, 105.2 dienen zur Ermittlung der Versorgungsspannung außerhalb der Ansteuerung. Das Eingangssignal X(t), also die von der Ansteuerung abhängigen Messgröße des Systems, ist die zu ermittelnde Versorgungsspannung.

**Patentansprüche**

1.  Verfahren zur Messwertermittlung in einem getaktet angesteuerten System (101), wobei die Taktung Ansteuerungszeiträume aufweist, in denen das System (101) angesteuert wird, und Nichtansteuerungszeiträume aufweist, in denen das System (101) nicht angesteuert wird, wobei die Messwertermittlung die Ermittlung wenigstens eines mittleren Spannungswertes der am System (101) anliegenden Spannung umfasst, wobei das Verfahren folgende Schritte umfasst:

    - Bestimmen (Schritt 102.1) sowohl von ersten Integrationszeiträumen in Abhängigkeit von der Taktung, wobei die ersten Integrationszeiträume innerhalb wenigstens eines der Ansteuerungszeiträume liegen, als auch Bestimmen (Schritt 102.2) von zweiten Integrationszeiträumen in Abhängigkeit von der Taktung, wobei die zweiten Integrationszeiträume innerhalb wenigstens eines der Nichtansteuerungszeiträume liegen,
    - Erfassen (Schritt 103) der am System (101) anliegenden Spannung,
    - Ermitteln (Schritt 104) von Summations- und/oder Integrationswerten durch Summation und/oder Integration der Spannung während der ersten und zweiten Integrationszeiträume,
    - Ermitteln (Schritt 105) des wenigstens einen mittleren Spannungswertes für wenigstens einen der Ansteuerungszeiträume und Nichtansteuerungszeiträume auf Grundlage von Zeitdaten der ersten und zweiten Integrationszeiträume und von den ermittelten Summations- und/oder Integrationswerten
    - wobei der Schritt des Ermittelns (Schritt 104) von Summations- und/oder Integrationswerten durch Summation und/oder Integration der Spannung während der ersten und zweiten Integrationszeiträume folgende Unterschritte umfasst:

- Ermitteln (Schritt 104.1) eines ersten Integrationswertes durch Integration der Spannung während wenigstens einem der ersten Integrationszeiträume, und
- Ermitteln (Schritt 104.2) eines zweiten Integrationswertes durch Integration der Spannung während wenigstens einem der zweiten Integrationszeiträume,

- wobei der Schritt des Ermittelns (Schritt 105) des wenigstens einen mittleren Spannungswertes für wenigstens einen der Ansteuerungszeiträume und Nichtansteuerungszeiträume folgende Unterschritte umfasst:

- Ermitteln (Schritt 105.1) eines ersten mittleren Spannungswertes ($U_2$), der die mittlere Spannung innerhalb der Ansteuerungszeiträume repräsentiert, durch Division des ersten Integrationswertes durch die Dauer seines zugehörigen ersten Integrationszeitraums, und
- Ermitteln (Schritt 105.2) eines zweiten mittleren Spannungswertes ($U_1$), der die mittlere Spannung innerhalb der Nichtansteuerungszeiträume repräsentiert, durch Division des zweiten Integrationswertes durch die Dauer seines zugehörigen zweiten Integrationszeitraums.

2. Verfahren nach Anspruch 1, wobei das Bestimmen (Schritt 102.1, 102.2) der ersten und/oder zweiten Integrationszeiträume außerdem in Abhängigkeit von wenigstens einem individuellen Parameter des Systems (101) erfolgt.

3. Verfahren nach Anspruch 2, wobei bei den individuellen Parametern die Trägheit des Systems (101) und/oder seiner Messumgebung berücksichtigt wird.

4. Verfahren nach Anspruch 2 oder 3, wobei bei den individuellen Parametern die Zeitverzögerung berücksichtigt wird, mit der das System (101) auf die Ansteuerungen reagiert.

5. Verfahren nach einem der Ansprüche 2 bis 4, wobei bei den individuellen Parametern die Zeitverzögerung bei der Durchführung von einem oder mehreren der Schritte des Erfassens (Schritt 103) einer von der Ansteuerung abhängigen Messgröße des Systems (101), des Ermittelns (Schritt 104) von Summations- und/oder Integrationswerten durch Summation und/oder Integration der Messgröße während der ersten und/oder zweiten Integrationszeiträume und des Ermitteln (Schritt 105) des Messwertes für wenigstens einen der Ansteuerungszeiträume und/oder Nichtansteuerungszeiträume berücksichtigt wird.

6. Verfahren nach einem der Ansprüche 1 bis 5, wobei die Durchführung des Schrittes des Ermittelns (Schritt 104) von Summations- und/oder Integrationswerten durch Summation und/oder Integration der Messgröße während der ersten und/oder zweiten Integrationszeiträume die Verwendung von digitaler Summation und/oder analoger Integration umfasst.

7. Verfahren nach Anspruch 6, wobei die Durchführung des Schrittes des Ermittelns (Schritt 104) von Summations- und/oder Integrationswerten durch Summation und/oder Integration der Messgröße während der ersten und/oder zweiten Integrationszeiträume durch eine Mischung mindestens eines analogen Integrationsschrittes, beispielsweise mittels eines Spannungs-/Frequenzwandlers, und mindestens einer digitalen Summation, beispielsweise mittels einer Hardwarelogik aus Zählern, realisiert wird.

8. Verfahren nach Anspruch 6, wobei die Durchführung des Schrittes des Ermittelns (Schritt 104) von Summations- und/oder Integrationswerten durch Summation und/oder Integration der Messgröße während der ersten und/oder zweiten Integrationszeiträume durch eine Mischung mindestens eines analogen Integrationsschrittes, beispielsweise mittels Delta-/Sigma-Modulatoren, und mindestens einer digitalen Summation, beispielsweise mittels einer Hardwarelogik aus Zählern, realisiert wird.

9. Verfahren nach Anspruch 8, ferner umfassend die Ermittlung des Stromwertes, der den durch die Ansteuerung verursachten Stromzuwachs repräsentiert, insbesondere durch Strommessung im Verbraucherpfad, insbesondere unter Verwendung der integrativen Messmethode.

10. Verfahren nach Anspruch 9, ferner umfassend die Ermittlung des Innenwiderstandes der Spannungsquelle, welche das System (101) mit Strom versorgt, auf Grundlage des ersten und zweiten mittleren Spannungswertes ($U_1$, $U_2$), insbesondere durch Differenzbildung ($U_1 - U_2$) und Division durch den ermittelten Stromwert.

**Claims**

1.  Method for determining measured values in a system (101) which is driven in a clocked manner, the clocking having driving periods, in which the system (101) is driven, and non-driving periods in which the system (101) is not driven, the operation of determining measured values comprising the operation of determining at least one average voltage value of the voltage applied to the system (101), the method comprising the following steps of:

    - both determining (step 102.1) first integration periods on the basis of the clocking, the first integration periods being within at least one of the driving periods, and determining (step 102.2) second integration periods on the basis of the clocking, the second integration periods being within at least one of the non-driving periods,
    - recording (step 103) the voltage applied to the system (101),
    - determining (step 104) summation and/or integration values by summing and/or integrating the voltage during the first and second integration periods,
    - determining (step 105) the at least one average voltage value for at least one of the driving periods and non-driving periods on the basis of time data relating to the first and second integration periods and on the basis of the summation and/or integration values determined,
    - the step of determining (step 104) summation and/or integration values by summing and/or integrating the voltage during the first and second integration periods comprising the following substeps of:

        - determining (step 104.1) a first integration value by integrating the voltage during at least one of the first integration periods, and
        - determining (step 104.2) a second integration value by integrating the voltage during at least one of the second integration periods,

    - the step of determining (step 105) the at least one average voltage value for at least one of the driving periods and non-driving periods comprising the following substeps of:

        - determining (step 105.1) a first average voltage value ($U_2$), which represents the average voltage within the driving periods, by dividing the first integration value by the duration of its associated first integration period, and
        - determining (step 105.2) a second average voltage value ($U_1$), which represents the average voltage within the non-driving periods, by dividing the second integration value by the duration of its associated second integration period.

2.  Method according to Claim 1, the operation of determining (steps 102.1, 102.2) the first and/or second integration periods also being carried out on the basis of at least one individual parameter of the system (101).

3.  Method according to Claim 2, the inertia of the system (101) and/or of its measurement environment being taken into account in the individual parameters.

4.  Method according to Claim 2 or 3, the time delay with which the system (101) responds to the driving operations being taken into account in the individual parameters.

5.  Method according to one of Claims 2 to 4, the time delay when carrying out one or more of the steps of recording (step 103) a measurement variable of the system (101), which measurement variable depends on the driving operation, of determining (step 104) summation and/or integration values by summing and/or integrating the measurement variable during the first and/or second integration periods and of determining (step 105) the measured value for at least one of the driving periods and/or non-driving periods being taken into account in the individual parameters.

6.  Method according to one of Claims 1 to 5, the operation of carrying out the step of determining (step 104) summation and/or integration values by summing and/or integrating the measurement variable during the first and/or second integration periods comprising the use of digital summation and/or analogue integration.

7.  Method according to Claim 6, the step of determining (step 104) summation and/or integration values by summing and/or integrating the measurement variable during the first and/or second integration periods being carried out by mixing at least one analogue integration step, for example using a voltage/frequency converter, and at least one digital summation, for example using hardware logic comprising counters.

8. Method according to Claim 6, the step of determining (step 104) summation and/or integration values by summing and/or integrating the measurement variable during the first and/or second integration periods being carried out by mixing at least one analogue integration step, for example using delta/sigma modulators, and at least one digital summation, for example using hardware logic comprising counters.

9. Method according to Claim 8, also comprising the determination of the current value, which represents the current increase caused by the driving operation, in particular by measuring current in the load path, in particular using the integrative measurement method.

10. Method according to Claim 9, also comprising the determination of the internal resistance of the voltage source, which supplies current to the system (101), on the basis of the first and second average voltage values ($U_1$, $U_2$), in particular by means of subtraction ($U_1$-$U_2$) and division by the current value determined.

**Revendications**

1. Procédé de détermination d'une valeur mesurée dans un système (101) commandé cadencé, le cadencement présentant des périodes de commande pendant lesquelles le système (101) est commandé et présentant des périodes de non commande pendant lesquelles le système (101) n'est pas commandé, la détermination de la valeur mesurée comprenant la détermination d'au moins une valeur de tension moyenne de la tension appliquée au système (101), le procédé comprenant les étapes suivantes :

    - détermination (étape 102.1) de premières périodes d'intégration en fonction du cadencement, les premières périodes d'intégration se trouvant à l'intérieur d'au moins l'une des périodes de commande, et aussi détermination (étape 102.2) de deuxièmes périodes d'intégration en fonction du cadencement, les deuxièmes périodes d'intégration se trouvant à l'intérieur de l'une des périodes de non commande,
    - détection (étape 103) de la tension appliquée au système (101),
    - détermination (étape 104) de valeurs d'addition et/ou d'intégration en additionnant et/ou en intégrant la tension pendant les premières et les deuxièmes périodes d'intégration,
    - détermination (étape 105) de l'au moins une valeur de tension moyenne pour au moins l'une des périodes de commande et des périodes de non commande en se basant sur des données de temps des premières et des deuxièmes périodes d'intégration et sur des valeurs d'addition et/ou d'intégration déterminées,
    - l'étape de détermination (étape 104) des valeurs d'addition et/ou d'intégration en additionnant et/ou en intégrant la tension pendant les premières et les deuxièmes périodes d'intégration comprenant les sous-étapes suivantes :
    - détermination (étape 104.1) d'une première valeur d'intégration en intégrant la tension pendant au moins l'une des premières périodes d'intégration, et
    - détermination (étape 104.2) d'une deuxième valeur d'intégration en intégrant la tension pendant au moins l'une des deuxièmes périodes d'intégration,
    - l'étape de détermination (étape 105) de l'au moins une valeur de tension moyenne pour au moins l'une des périodes de commande et des périodes de non commande comprenant les sous-étapes suivantes :
    - détermination (étape 105.1) d'une première valeur de tension moyenne ($U_2$), qui représente la tension moyenne à l'intérieur des périodes de commande, en divisant la première valeur d'intégration par la durée de sa première période d'intégration associée, et
    - détermination (étape 105.2) d'une deuxième valeur de tension moyenne ($U_1$), qui représente la tension moyenne à l'intérieur des périodes de non commande, en divisant la deuxième valeur d'intégration par la durée de sa deuxième période d'intégration associée.

2. Procédé selon la revendication 1, selon lequel la détermination (étapes 102.1, 102.2) des premières et/ou des deuxièmes périodes d'intégration s'effectue en outre en fonction d'au moins un paramètre individuel du système (101).

3. Procédé selon la revendication 2, selon lequel l'inertie du système (101) et/ou de son environnement de mesure est prise en compte pour les paramètres individuels.

4. Procédé selon la revendication 2 ou 3, selon lequel le retard dans le temps avec lequel le système (101) réagit aux commandes est pris en compte pour les paramètres individuels.

5. Procédé selon l'une des revendications 2 à 4, selon lequel le retard dans le temps lors de l'exécution d'une ou de plusieurs étapes de détection (étape 103) d'une grandeur de mesure du système (101) dépendant de la commande, de détermination (étape 104) des valeurs d'addition et/ou d'intégration en additionnant et/ou en intégrant la grandeur de mesure pendant les premières et/ou les deuxièmes périodes d'intégration et de détermination (étape 105) de la valeur mesurée pour au moins l'une des périodes de commande et/ou des périodes de non commande est pris en compte pour les paramètres individuels.

6. Procédé selon l'une des revendications 1 à 5, selon lequel l'exécution de l'étape de détermination (étape 104) des valeurs d'addition et/ou d'intégration en additionnant et/ou en intégrant la grandeur de mesure pendant les premières et/ou les deuxièmes périodes d'intégration comprend l'utilisation de l'addition numérique et/ou de l'intégration analogique.

7. Procédé selon la revendication 6, selon lequel l'exécution de l'étape de détermination (étape 104) des valeurs d'addition et/ou d'intégration en additionnant et/ou en intégrant la grandeur de mesure pendant les premières et/ou les deuxièmes périodes d'intégration est réalisée par un mélange d'au moins une étape d'intégration analogique, par exemple au moyen d'un convertisseur tension/fréquence, et d'au moins une addition numérique, par exemple au moyen d'une logique physique composée de compteurs.

8. Procédé selon la revendication 6, selon lequel l'exécution de l'étape de détermination (étape 104) des valeurs d'addition et/ou d'intégration en additionnant et/ou en intégrant la grandeur de mesure pendant les premières et/ou les deuxièmes périodes d'intégration est réalisée par un mélange d'au moins une étape d'intégration analogique, par exemple au moyen de modulateurs delta/sigma, et d'au moins une addition numérique, par exemple au moyen d'une logique physique composée de compteurs.

9. Procédé selon la revendication 8, comprenant en plus la détermination de la valeur du courant qui représente la croissance du courant provoquée par la commande, notamment en mesurant le courant dans le chemin de la charge, notamment en utilisant une méthode de mesure intégrative.

10. Procédé selon la revendication 9, comprenant en outre la détermination de la résistance interne de la source de tension qui alimente électriquement le système (101) en se basant sur la première et la deuxième valeur de tension moyenne ($U_1$, $U_2$), notamment en calculant la différence ($U_1 - U_2$) et en divisant par la valeur du courant déterminée.

Fig. 1

Fig. 2

**Fig. 3**

**Fig. 4**

**Fig. 5**

**Fig. 6**

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10359224 A1